# EUROPEAN PATENT APPLICATION

(11) **EP 2 302 934 A1**
(43) Date of publication of application: **30.03.2011**
(21) Application number: 09252277.0
(22) Date of filing: 25.09.2009
(51) Int. Cl.: H04N 7/26, H04N 7/46, H04N 5/44, H04N 7/50

(54) **Joint video up-conversion and coding artifact reduction**

(71) Applicant: NXP B.V., 5656 AG Eindhoven (NL)
(72) Inventor: Joosten, Han, Redhill Surrey, RH1 1DL (GB)
(74) Representative: Williamson, Paul Lewis

(57) **Abstract**

A method of reducing the appearance of coding artifacts in a decoded video signal, the method comprising: detecting (602) a step change between adjacent vertical lines of pixels in an input decoded frame; comparing (604, 607) a value of the step change with a threshold value to detect a coding artifact; and applying (606, 610) a blurring operation to pixels in a horizontal vicinity of the step change to reduce the detected coding artifact.

## Description

The invention relates to the reduction of coding artifacts in decoded video frames.

Many video broadcasts involve at least one video compression/decompression process, for example of an MPEGx type, in the chain between a video source and displaying of decoded video on a receiver. Depending on the type of coding and degree of compression used, this can result in visual artifacts arising from the way the video source signal is compressed. Broadcasters tend to reduce the video bandwidth as much as possible to save money and fit more channels into a limited bandwidth. Visual artifacts resulting from the compression process become more visible when the bandwidth for a video channel is reduced. Due to the high contrast ratios and high bandwidth capacity of modern visual display units such as LCD screens, these artifacts can become highly visible, and tend to be experienced by a viewer as annoying or distracting.

Common types of artifacts are known generally as 'blocking' and 'ringing'. Blocking artifacts can result from compressing blocks of an original video source frame having a small range of luminance values to a single averaged luminance value for each block. Blocking is therefore more evident when the video frame comprises a large region having gradual changes in luminance, as the resulting decoded blocks will tend to be more visible by the step changes in luminance between each block.

Ringing is caused by compression of features in video frames having large step changes in luminance, for example at the edges of an object pictured against a contrasting background. Over-compression will tend to result in pixels to one side of an edge reflecting part of the object information. This is more visible, for example, around objects pictured against a more uniform background.

Existing solutions to the above problems tend to involve ways of reducing ringing and blocking artifacts by analysing one or more entire frames. An example of a post-filter for de-blocking and de-ringing of video data is disclosed in US 7,362,810.

In existing solutions an entire frame may, for example, be analysed to determine whether a grid pattern is visible, which would suggest the presence of blocking artifacts, or a series of frames may be analysed to determine the presence of blocking or ringing. Existing solutions tend, however, to be based around dedicated hardware for processing a video stream, which can add complexity and expense to a video decoder.

An object of the invention is to address the above mentioned problem, and provide a solution for reducing artifacts in video frames having a reduced complexity.

According to the invention there is provided a method of reducing the appearance of coding artifacts in a decoded video signal, the method comprising:
detecting a step change between adjacent vertical lines of pixels in an input decoded frame;
comparing a value of the step change with a threshold value to detect a coding artifact; and
applying a blurring operation to pixels in a horizontal vicinity of the step change to reduce the detected coding artifact.

An advantage of the invention is that the process of detection, comparison and application of a blurring operation can all be carried out using hardware that may also be used for another purpose, such as vertical up-scaling or vertical peaking reduction. The invention thereby saves on the use of hardware resources, making implementation of a de-blocking and de-ringing process less complex and more efficient.

The adjacent vertical lines preferably extend across 3 or more consecutive horizontal lines of the input decoded frame, these 3 lines being typically available as line memories in a vertical upscaler or in a vertical peaking reduction module.

A blocking artifact can be detected when the value of the step change is less than the threshold value. Alternatively, a ringing artifact can be detected when the value of a detected step change is above the threshold value. For detecting both blocking and ringing artifacts, a separate threshold value may apply, the blocking threshold being lower than the ringing threshold.

When detecting a blocking artifact, the blurring operation may comprise changing the values of the pixels defining the detected step change to reduce the step change. The blurring operation may comprise calculating an average of pixel values either side of the detected step change, and applying this average value to each pixel, thereby reducing the appearance of the step change. One of more pixels either side of the step change may be used in the blurring operation.

A counter can be incremented each time a step change is detected, the counter being compared to a counter threshold value after the method is performed over the input decoded frame. If the counter threshold value is exceeded, a vertical peaking reduction operation can be performed on the frame. The counter is preferably incremented according to the detection of blocking artifacts. An advantage of this approach is that a vertical peaking reduction operation, which is typically available as part of existing upscaling hardware, can be used on an entire frame but only when required, i.e. when a predetermined threshold degree of blocking indicated by the counter is exceeded. The counter is reset after each frame.

For ringing artifacts, which can be detected when the value of the step change is greater than the threshold value, the blurring operation can be performed on pixels on a left side or a right side of the detected step change. The blurring operation may be performed on pixels on both left and right sides of the detected step change. In such blurring operations, one or more pixels to one or both sides of the step change are blurred according to the values of horizontally adjacent pixels, for example according to an average of the values of a number of horizontally adjacent pixels.

The invention is preferably implemented as part of a method of an upscaling operation on an input frame of a decoded video signal to produce an output frame having a higher pixel resolution. A particular advantage of incorporating the invention into a vertical upscaling process is that line memories for storing and operating on the input video frame are already available. The detection and blurring steps can therefore be carried out with a minimum of additional hardware.

The invention may be implemented as a computer program for instructing a computer to perform the method. The invention can also be implemented as part of a vertical scaler module configured to receive an input decoded video signal and provide an output upscaled version of the video signal, where the vertical scaler module is configured to perform the above method. The vertical scaler module would typically be part of a video display unit, although could be comprised in a separate decoding unit configured to supply an upscaled video signal to a video display unit.

The invention enables a reduction in visibility of blocking and ringing artifacts caused by MPEGx compression in video streams, but with a reduced complexity to existing solutions because only a small number of horizontal lines need to be analysed at any one time.

By integrating the invention into a scaler module, a function that is typically always present in video display units such as LCD television displays, use is made of already existing line memories in the scaler module, making this particular implementation particularly efficient in use of hardware, and consequently more cost effective.

The invention is described in further detail below by way of example, with reference is made to the accompanying figures, in which:
figure 1 is a schematic block diagram of a video frame upscaler;
figure 2 is a schematic representation of a series of lines of a video frame having blocking and ringing artifacts;
figures 3a to 3d are schematic representations of a 3-line portion of the series of lines of figure 2, illustrating detection of blocking and ringing artifacts;
figure 4 is a schematic representation of an exemplary blurring operation carried out on a group of pixels around a blocking artifact;
figure 5 is a schematic representation of an exemplary blurring operation carried out on a group of pixels covering a ringing artifact; and
figure 6 is a flow diagram of an exemplary method for detection and correction of blocking and ringing artifacts.

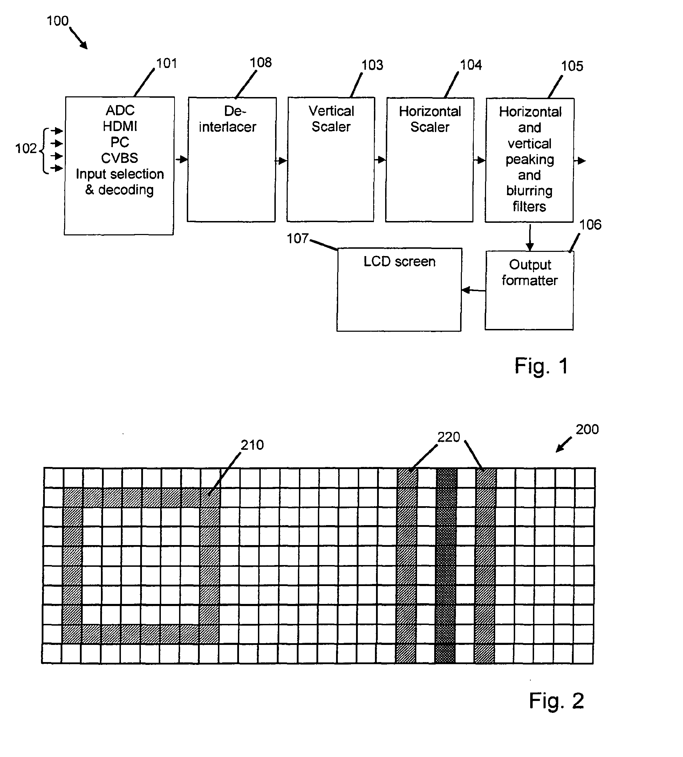

Shown in figure 1 is a simplified block diagram of typical components present in a scaling engine 100 for a video display unit. The scaling engine comprises a number of inputs 102 for accepting various forms of video signal, for example as ADC, HDMI, PC or CVBS signals. An input module 101 selects the input to use and decodes a video signal from the input. A vertical scaler module 103 takes an output from the input module and scales the number of pixels in a vertical direction by a selected amount to match the vertical resolution of a display to which the scaling engine is connected. A horizontal scaler module 104 scales the number of pixels in a horizontal direction to match the horizontal resolution of the display. Horizontal and vertical peaking and blurring filters 105 are applied to the decoded video signal as required, and an output formatting module 106 formats the signal for providing to a display such as an LCD screen 107.

For cases where the input video signal is interlaced, a de-interlacer module 108 can be provided, positioned between the input module 101 and the vertical scaler module 103, the de-interlacer module being configured to convert the interlaced video input into consecutive lines of pixels that can be used by subsequent modules.

The vertical scaler module 103 typically comprises a 3-line memory for storing three consecutive horizontal lines of pixels in an input video frame during the process of vertical upscaling. According to aspects of the invention, this module 103 can be adapted to be used also for carrying out detection and reduction of blocking and ringing artifacts.

In the case of MPEG encoded video frames, blocking and ringing artifacts can be detected where there is a step change between adjacent lines of pixels. Vertical lines of pixels are used by way of example in the following description of exemplary embodiments of the invention although, at least for ringing artifacts, lines of pixels at an angle to the vertical may also be detected. In order to separate intended video content from blocking and ringing artifacts a block detector may conventionally be used. Such detectors are however expensive in terms of additional hardware and processing and are not necessarily reliable in terms of being able to determine and correct for the presence of blocking.

According to the following exemplary embodiments of the invention, a simple method can be employed to reliably detect blocking and ringing artifacts. In a general aspect, when a step change is detected along a vertical line that is 3 or more pixels long, and the transient of this step change is small, it is concluded that the step change was caused by a compression artifact resulting in blocking. An action can then be taken to blur the transient only, and not the pixels next to the transient. The blurring operation is one-dimensional, whereas blocking itself is 2 dimensional. To take care of any visible vertical transients, a counter is implemented to count the number of blocking artifacts in each frame. A higher count indicates a higher degree of blocking in a frame. Above a certain threshold, which may be determined empirically, a vertical peaking reduction operation can be carried out to reduce the appearance of vertical transients, which would otherwise be visible as horizontal lines in the video frame. A frame is therefore subjected to vertical peaking reduction only if blocking is present to a large extent. De-blocking in two dimensions is consequently effectively achieved making only use of existing hardware performing detection of blocking artifacts in only one dimension. This makes the method particularly cost effective for being implemented.

Ringing artifacts can also be determined by detection of step changes between lines of pixels. In contrast to blocking artifacts, ringing results from larger step changes, so are detected when a transient above a certain value is detected between adjacent lines of pixels. When such a transient is detected, a blurring operation can be performed on pixels either side of the transient, rather than on the transient itself. Since this is also a one-dimensional action, the cost of implementation is also low.

Figure 2 schematically illustrates a series of lines of pixels 200, within which a blocking artifact 210 and a ringing artifact 220 are present. The blocking artifact 210 is characterised by step changes between adjacent vertical lines of pixels, where the step changes are low in magnitude, whereas the ringing artifact 220 is present either side of step changes between adjacent vertical lines of pixels where the step changes are high in magnitude. In figure 2, darker shading in a pixel is intended to represent a higher value for that pixel. The value may, for example, represent the luminosity value for that pixel.

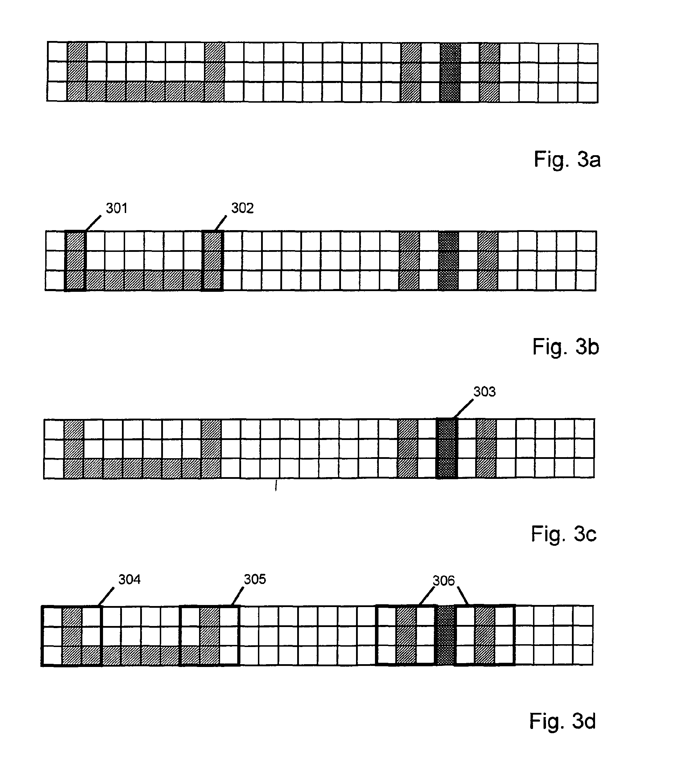

Figures 3a to 3d illustrate a sample of three horizontal lines from the series of pixels shown in figure 2 to illustrate an exemplary method of detection of blocking and ringing artifacts. The 3 lines represent the content of the memory in a vertical scaler module, the memory being updated by one line each time the memory is updated as a scan is carried out over an input video frame. The pixels in figure 3a therefore show the contents of the memory at a given point in time while scanning across the video frame represented by the series of lines in figure 2.

Step changes along adjacent lines of pixels where the changes are lower than a set blocking threshold, while being above a minimum threshold, are detected. These are indicated in figure 3b by vertical lines of pixels 301, 302, which define edges of a blocking artifact. Step changes along adjacent lines of pixels that are higher than a set ringing threshold are also detected. These are indicated in figure 3c by vertical line of pixels 303.

Figure 3d illustrates representative regions of pixels on which blurring operations are to be performed, given these detected artifacts. A blurring operation is performed on pixels within regions 304, 305 to reduce the appearance of the detected blocking artifact, and a different blurring operation is performed within region 306 to reduce the appearance of ringing artifacts either side of the detected large step change in the line of pixels 303.

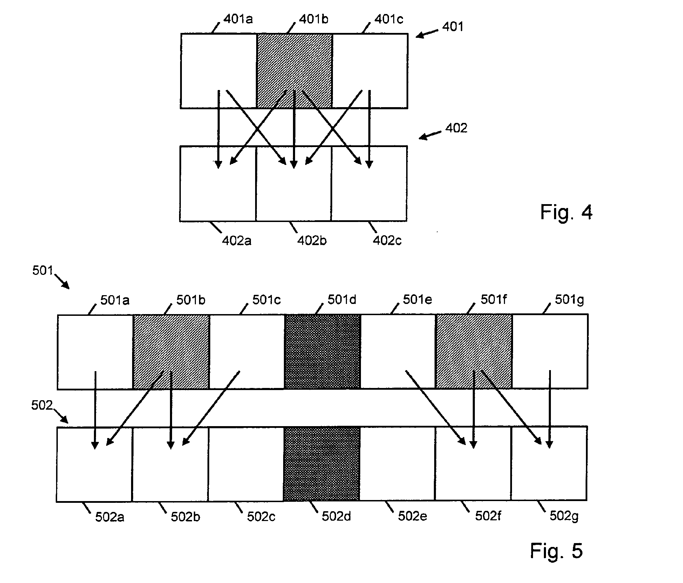

Figure 4 illustrates an exemplary blurring operation on a set of pixels 401 associated with the detected blocking artifact shown in figure 3b, the blurring operation being represented by arrows showing how the values of the pixels 401 are used to obtain a transformed set of pixels 402 in which the appearance of the blocking artifact is reduced. The value of each pixel in the transformed set is obtained by averaging the values of the pixel with one (or more) adjacent pixels. Pixel 402a is obtained by averaging the values of pixels 401a and 401b. Pixel 402b is obtained by averaging the values of pixels 401a, 401b and 401c. Pixel 402c is obtained by averaging the values of pixels 401b and 401c. The appearance of the blocking artifact, of which pixel 401 b forms a part, is thereby reduced.

Figure 5 illustrates an exemplary blurring operation on a set of pixels 501 associated with a detected ringing artifact shown in figure 3c, the blurring operation being represented by arrows showing how the values of the pixels 501 are used to obtain a transformed set of pixels 502 in which the appearance of ringing artifacts either side of the vertical step change is reduced. In the case of ringing artifacts, the step change itself, represented by pixels 501 c, 501 d and 501 e, is left unchanged. The ringing artifacts are reduced by averaging the values of a plurality of pixels on one or both sides of the detected step change. Pixel 502a is obtained by averaging the values of pixels 501a and 501b. Pixel 502b is obtained by averaging the values of pixels 501b and 501 c. The values of pixels 502c, 502d and 502e are the same as those of pixels 501c, 501d and 501e. Pixel 502f is obtained by averaging the values of pixels 501e and 501f. Pixel 502g is obtained by averaging the values of pixels 501f and 501g.

The above blurring operations, obtained by averaging the values of adjacent pixels, represents only one possible way for each case of reducing the appearance of blocking and ringing artifacts. Alternative embodiments may involve averaging more or different pixels than in the above described embodiments.

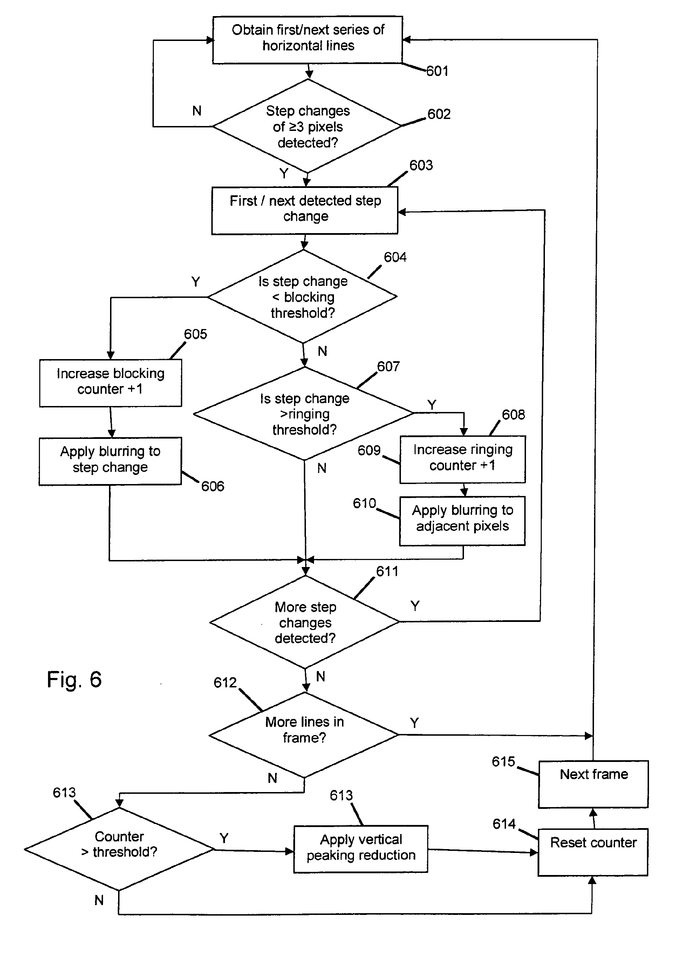

Figure 6 illustrates an exemplary method according to the invention, in the form of a flow chart showing the various steps involved in detecting and correcting for blocking and ringing artifacts. The method starts (step 601) by obtaining a first or next series of horizontal lines, for example in the above mentioned 3-line memory in a vertical scaler module. The lines of pixels are analysed to determine whether there are any step changes of 3 or more lines of pixels (step 602). If so, the method proceeds with analysing the detected step changes (step 603). For each detected step change, the magnitude of the step change is compared with a blocking threshold (step 604). If the step change is below this blocking threshold, the blocking counter is incremented (step 605) and a blurring operation is performed on the pixels around the step change (step 606). If there are any more detected step changes, the process proceeds (step 611) to the next detected step change (step 603). If the detected step change is not below the blocking threshold (step 604), and is greater than a ringing threshold (step 607), the ringing counter is incremented (step 608) and a blurring operation is performed on pixels either side of the step change (step 610). If there are any more detected step changes, the process proceeds (step 611) to the next detected step change (step 603). If the detected step change is not below the blocking threshold (step 604), and is also not above the ringing threshold (step 607), the step change is left alone and no blurring operation is performed.

Once all the step changes have been processed, and any blurring operations carried out, i.e. once there are no more step changes (step 611), the method proceeds to the next horizontal line in the frame (step 612), and repeats until there are no more lines (step 612). At this point, the blocking or ringing counter is compared with a threshold value and, if the counter is above this value, a vertical peaking reduction is performed (step 613), this type of operation being generally available in typical video frame upscaling engines for smoothing out any transients resulting from the upscaling process. The counter is then reset (step 614) and the next video frame is processed (step 615), the method then repeating for the next frame.

Various parameters will need to be defined to carry out the above method, such as the blocking and ringing thresholds, an amount of blurring for both blocking and ringing as well as which pixels will be selected for blurring operations. As an exemplary illustration, given a range of values of 0 to 255 (8 bits) for each pixel, a value for the blocking threshold may be around 40, and a value for the ringing threshold may be around 150. In order to reduce the number of blurring operations carried out for detected blocking artifacts, a minimum value may also be set, below which step changes will not result in blurring.

Other embodiments are intentionally within the scope of the invention as defined by the appended claims.

## Claims

1. A method of reducing the appearance of coding artifacts in a decoded video signal, the method comprising:
detecting (602) a step change between adjacent vertical lines of pixels in an input decoded frame;
comparing (604, 607) a value of the step change with a threshold value to detect a coding artifact; and
applying (606, 610) a blurring operation to pixels in a horizontal vicinity of the step change to reduce the detected coding artifact.

2. The method of claim 1 wherein each line is a vertical line extending across 3 or more consecutive horizontal lines of the input decoded frame (200).

3. The method of claim 1 or claim 2 wherein a blocking artifact (210) is detected when the value of the step change is less than the threshold value.

4. The method of claim 3 wherein the blurring operation comprises changing the values of the pixels defining the detected step change to reduce the step change.

5. The method of claim 4 wherein the blurring operation comprises calculating an average of pixel values either side of the detected step change.

6. The method of any preceding claim wherein a counter is incremented (605, 608) each time a step change is detected.

7. The method of claim 6 wherein the counter is compared (613) to a counter threshold value after the method is performed over the input decoded frame and a vertical peaking reduction operation is performed (613) on the frame if the counter is over the counter threshold value.

8. The method of claim 1 or claim 2 wherein a ringing artifact is detected when the value of the step change is greater than the threshold value.

9. The method of claim 8 wherein the blurring operation (610) is performed on pixels on a left or right side of the detected step change.

10. The method of claim 9 wherein the blurring operation (610) is performed on pixels on both left and right sides of the detected step change.

11. A method of upscaling an input frame of a decoded video signal to produce an output frame having a higher pixel resolution, the method comprising a vertical upscaling process incorporating the method of any preceding claim.

12. A computer program for instructing a computer to perform the method of any one of claims 1 to 11.

13. A vertical scaler module (103) configured to receive an input decoded video signal and provide an output upscaled version of the video signal, the vertical scaler module being configured to perform the method of any one of claims 1 to 11.

14. A video display unit (100) comprising the vertical scaler (103) module according to claim 13.
